# EUROPÄISCHE PATENTANMELDUNG

(11) **EP 4 804 358 A1**
(43) Veröffentlichungstag der Anmeldung: **09.09.2026**
(21) Anmeldenummer: 26159462.6
(22) Anmeldetag: 19.02.2026
(51) Int. Cl.: H02G 3/08, H02G 3/12

(54) **ADAPTER ZUR KOPPLUNG ZWEIER INSTALLATIONSGERÄTE SOWIE ANORDNUNG MIT EINEM SOLCHEN ADAPTER**

(30) Priorität: 04.03.2025 DE 102025108097
(71) Anmelder: Albrecht Jung GmbH & Co. KG, 58579 Schalksmühle (DE)
(72) Erfinder: Riccardi, Janine Verena, 58579 Schalksmühle (DE)
(74) Vertreter: Fobbe, Tobias

(57) **Zusammenfassung**

Vorgestellt wird ein Adapter A zur Kopplung zweier, einen Tragring T und einen Sockeleinsatz S aufweisenden, Installationsgeräte 11, I2 der Gebäudeinstallationstechnik, insbesondere zweier Steckdosen. Besonders dabei ist, dass der Adapter A mindestens einen ersten und einen zweiten Kopplungsabschnitt KE1, KE2 und mindestens einen ersten und einen zweiten bezüglich der Kopplungsabschnitte KE1, KE2 in Einbautiefenrichtung versetzten Kopplungsflansch KF1, KF2 aufweist, wobei der erste Kopplungsabschnitt KE1 und der zweite Kopplungsabschnitt KE2 zur Kopplung mit jeweils einem Installationsgerät 11, I2 ausgebildet ist.

## Beschreibung

Die Erfindung betrifft einen Adapter zur Kopplung zweier, einen Tragring und einen Sockeleinsatz aufweisenden, Installationsgeräte der Gebäudeinstallationstechnik, insbesondere zweier Steckdosen.

Ferner betrifft die Erfindung eine Anordnung umfassend zwei Installationsgeräte und einen solchen Adapter.

Aus EP 2 333 923 B1 ist ein Mehrfachtragring bekannt geworden, in den benachbarte Installationsgeräte eingesetzt werden. Damit wird das Ausrichten benachbarter Installationsgeräte effektiv entbehrlich, da bereits durch den Mehrfachtragring vorgegeben. Dieses geht jedoch mit dem Nachteil mangelnder Flexibilität auf der Baustelle einher, da ein Mehrfachtragring in unterschiedlichen Kapazitäten (beispielsweise für vier, fünf oder sechs benachbarte elektrische/elektronische Installationsgeräte) vorzuhalten ist. Zudem setzt die Verwendung eines solchen Mehrfachtragrings voraus, dass die Bohrungen für die Installationsdosen besonders präzise vorzunehmen sind, da der Mehrfachtragring sonst zu asymmetrisch auf den Installationsdosen positioniert ist und ein Einsetzen der Einsätze in den Mehrfachtragring Probleme bereitet, da die Einsätze unter Führung durch den Mehrfachtragring mit der Installationsdose kollidieren.

Aus DE 10 2004 024 093 A1 ist zudem eine Abdeckung bekannt geworden, bei der ein Halteadapter schwimmend in einem Designrahmen gelagert ist, um unsymmetrische Spaltmaße zu kompensieren. Insofern handelt es sich um eine Fehlerkorrektur, wobei das Installationsgerät, insbesondere der Halteadapter und der Designrahmen, diesbezüglich Merkmale aufweisen müssen, wobei die Designfreiheitsgrade verringert und die Herstellungskosten erhöht werden.

Ferner sind einfache Adapter, die als Bleche ausgeformt sind, bekannt, mittels derer zwei benachbarte Installationsgeräte miteinander an ihrem jeweiligen Tragring mittels Durchsetzfügen verbunden werden.

Problematisch bei solchen vorbekannten gattungsgemäßen Adaptern ist jedoch, dass das Durchsetzfügen kostenintensiv ist und die Stabilität der benachbarten Installationsgeräte nicht optimal ist, insbesondere ein Wackeln auftreten kann.

Ausgehend von diesem diskutierten Stand der Technik liegt der Erfindung die Aufgabe zugrunde, eine stabile und kostengünstige Lösung zu finden, eine Kopplung zweier Installationsgeräte mittels Adapter zu realisieren.

Gelöst wird diese Aufgabe durch einen Adapter zur Kopplung zweier, einen Tragring und einen Sockeleinsatz aufweisenden, Installationsgeräte der Gebäudeinstallationstechnik, insbesondere zweier Steckdosen, wobei der Adapter mindestens einen ersten und einen zweiten Kopplungsabschnitt und mindestens einen ersten und einen zweiten bezüglich der Kopplungsabschnitte in Einbautiefenrichtung versetzten Kopplungsflansch aufweist, wobei der erste Kopplungsabschnitt und der zweite Kopplungsabschnitt zur Kopplung mit jeweils einem Installationsgerät ausgebildet ist.

Der Kerngedanke der Erfindung besteht darin, dass der erfindungsgemäße Adapter zur Kopplung zweier, einen Tragring und einen Sockeleinsatz aufweisenden, Installationsgeräte, zwei Kopplungsabschnitte und zwei Kopplungsflansche aufweist. Allein durch die Vielzahl der unterschiedlichen Kopplungsflansche beziehungsweise Kopplungsabschnitte wird bereits eine stabile Verbindung geschaffen. Dadurch, dass der erste und der zweite Kopplungsflansch bezüglich der Kopplungsabschnitte in Einbautiefenrichtung versetzt angeordnet, (also beanstandet) sind, beispielsweise mit einem Abstand von mindestens 1 cm, wird die Stabilität der durch den Adapter hergestellten Verbindung besonders einfach und stabil realisiert. Ein Wackeln beziehungsweise Abknicken ist damit wirksam vermieden.

Bevorzugt greift im Rahmen der Erfindung ein Kopplungsabschnitt auf ein Verrasten, ein Aufstecken oder ein Aufschieben (beispielsweise an einem Traging) zurück, während ein Kopplungsflansch bevorzugt sich lediglich an einem Installationsgerät abstützt.

Gemäß einer bevorzugten Ausgestaltung des erfindungsgemäßen Adapters greift der erste und zweite Kopplungsabschnitt in den Tragring der Installationsgeräte ein. Ein Eingreifen kann dabei insbesondere durch ein Verrasten realisiert sein.

In einer weiteren Ausgestaltung des erfindungsgemäßen Adapters greift der erste und der zweite Kopplungsflansch in einen Bereich des Sockeleinsatzes der Installationsgeräte ein. Ein Eingreifen kann dabei insbesondere durch ein Abstützen realisiert sein. Der Adapter stützt sich außerdem an den Tragringlaschen ab, um so eine stabile und parallele Verbindung der beiden Installationsgeräte zu schaffen.

Gemäß einer weiteren Ausgestaltung des erfindungsgemäßen Adapters weist dieser Elemente zur Leitungsführung und/oder Polverbindung auf. Dieses vereinfacht die Leitungsführung oder Polverbindung spürbar und verbessert die Installation in der Dose aufgrund der geordneten Leitungsführung.

Gemäß einer weiteren Ausgestaltung des erfindungsgemäßen Adapters weist dieser einen Lösehebelmechanismus auf, um eine Kopplung zweier Installationsgeräte rückgängig zu machen und das Fügen von Installationsgeräten mit Spreizkrallen zu vereinfachen. Bevorzugt ist dabei, dass der Lösehebelmechanismus so ausgebildet ist, dass der erste und zweite Kopplungsabschnitt bei einer Betätigung des Lösehebelmechanismus flexibel ausgebildet ist und sich bewegt, um die Kopplung der Installationsgeräte rückgängig zu machen.

Gemäß einer weiteren Ausgestaltung des erfindungsgemäßen Adapters weist der Adapter ein erstes und zweites Einsatzelement für Spreizkrallenaufnahmen der zwei Installationsgeräte auf, wobei die Einsatzelemente in mechanischer Wirkverbindung mit den Spreizkrallenaufnahmen stehen.

Ferner betrifft die Erfindung eine Anordnung, umfassend zwei Installationsgeräte und einen erfindungsgemäßen Adapter, wobei die zwei Installationsgeräte durch den Adapter gekoppelt sind. Es versteht sich, dass die erfindungsgemäße Anordnung auch auf mehrere Adapter und Installationsgeräte ausdehnbar ist. Bevorzugt sind die Installationsgeräte mit elektrischen Leitungen verbunden, wobei der Adapter Elemente zur Leitungsführung und/oder Polverbindung aufweist.

Nachfolgend ist die Erfindung unter Bezugnahme auf die beigefügten Figuren anhand diverser Ausführungsbeispiele beschrieben. Es zeigen:
- **Fig. 1:**: eine schematische perspektivische Seitenansicht zweier erfindungsgemäßer Adapter,
- **Fig. 2:**: eine schematische perspektivische Seitenansicht einer erfindungsgemäßen Anordnung,
- **Fig. 3:**: eine schematische Frontalansicht zweier erfindungsgemäßer Anordnungen,
- **Fig. 4:**: eine schematische Frontalansicht (oben) beziehungsweise Querschnittsansicht (unten) einer erfindungsgemäßen Anordnung, und
- **Fig. 5:**: eine schematische Frontalansicht (oben) beziehungsweise Querschnittsansicht (unten) einer erfindungsgemäßen Anordnung.

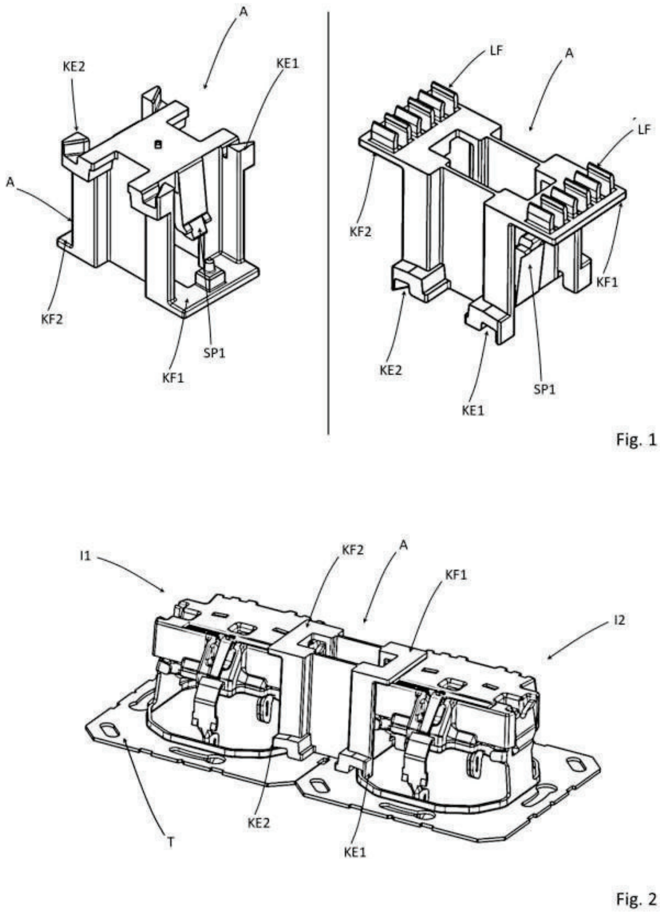

Die in Figur 1 schematisch gezeigten Adapter A zur Kopplung zweier, einen Tragring T und einen Sockeleinsatz S aufweisenden, Installationsgeräte I1, I2 der Gebäudeinstallationstechnik, sind dadurch gekennzeichnet, dass der Adapter A mindestens einen ersten und einen zweiten Kopplungsabschnitt KE1, KE2 und mindestens einen ersten und einen zweiten bezüglich der Kopplungsabschnitte KE1, KE2 in Einbautiefenrichtung versetzten Kopplungsflansch KF1, KF2 aufweist, wobei der erste Kopplungsabschnitt KF1 und der zweite Kopplungsabschnitt KF2 zur Kopplung mit jeweils einem Installationsgerät I1, I2 ausgebildet ist. Erkennbar ist, dass die Kopplungsabschnitte KE1, KE2 und die Kopplungsflansche KF1, KF2 geschickt in Einbautiefenrichtung versetzt sind, so dass ein Wackeln beziehungsweise Kippeln der Verbindung zwischen zwei Installationsgeräten wirksam vermieden ist. Der rechte Adapter A weist zur Vorkonfektionierung Elemente LF zur Leitungsführung und/oder Polverbindung auf. Vorliegend sind zusätzliche Einsatzelemente SP1 so ausgestaltet, dass sie in einen Bereich des Installationsgerätes eingreifen (zum Beispiel am Tragring), um so ein Lösen beziehungsweise Herausrutschen des Adapters in z-Richtung (in die Dose) zu verhindern.

Figur 2 zeigt eine schematische perspektivische Seitenansicht einer erfindungsgemäßen Anordnung, wobei die zwei Installationsgeräte I1, I2 durch den Adapter A einfach, kostengünstig und stabil gekoppelt sind.

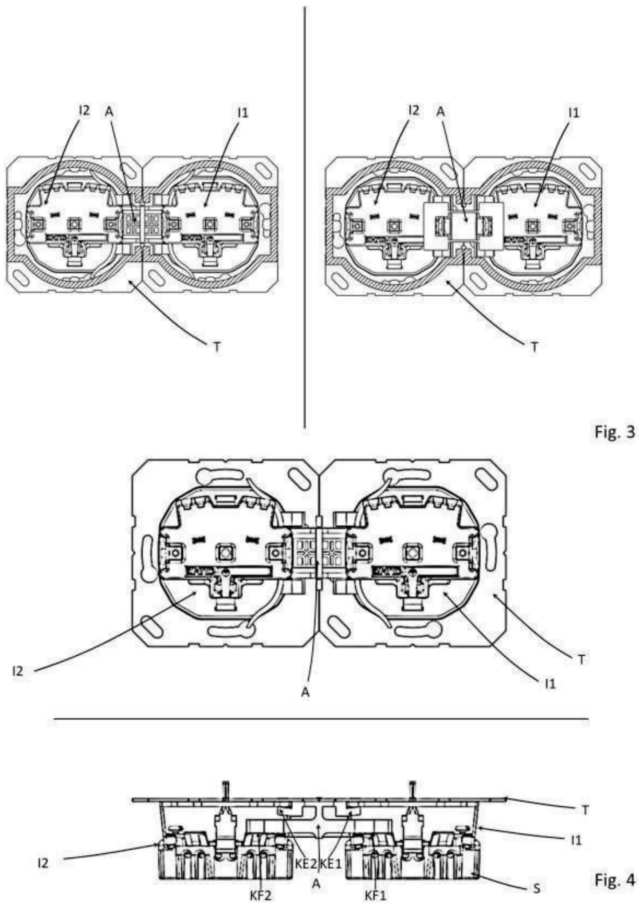

Die in Figur 3 gezeigte schematische Frontalansicht zweier erfindungsgemäßer Anordnungen zeigt, dass der erfindungsgemäße Adapter A nicht nur eine stabile Verbindung, sondern auch eine präzise Ausrichtung der Installationsgeräte I1, I2 ermöglicht.

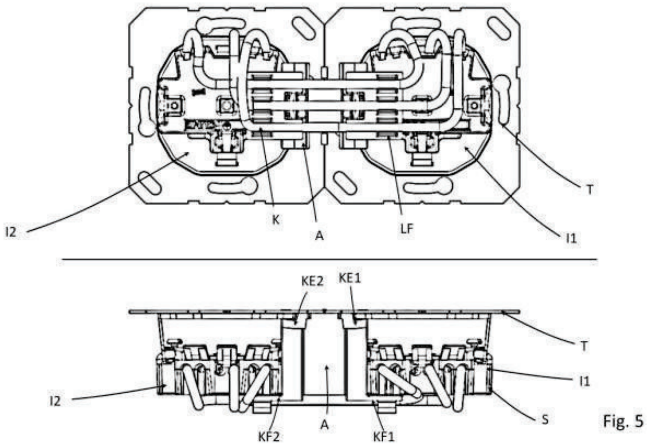

Figur 4 zeigt eine schematische Frontalansicht (oben) beziehungsweise Querschnittsansicht (unten) einer erfindungsgemäßen Anordnung, wobei Figur 5 eine weitere erfindungsgemäße Anordnung zeigt, wobei die Installationsgeräte I1, I2 mit elektrischen Leitungen K verbunden sind, wobei der Adapter A Elemente LF zur Leitungsführung und/oder Polverbindung aufweist.

Die Erfindung ist anhand von Ausführungsbeispielen beschrieben. Ohne den Umfang der geltenden Ansprüche zu verlassen, ergeben sich für einen Fachmann zahlreiche weitere Möglichkeiten, diese umzusetzen, ohne dass dieses im Rahmen dieser Ausführungen im Einzelnen erläutert werden müsste.

### Bezugszeichenliste

- A: Adapter
- I1, I2: Installationsgerät
- KF1, KF2: Kopplungsflansch
- KE1, KE2: Kopplungsabschnitt
- K: elektrische Leitungen
- LF: Elemente zur Leitungsführung und/oder Polverbindung
- S: Sockeleinsatz
- T: Tragring
- SP1: Einsatzelemente

## Patentansprüche

1. Adapter (A) zur Kopplung zweier, einen Tragring (T) und einen Sockeleinsatz (S) aufweisenden, Installationsgeräte (I1, I2) der Gebäudeinstallationstechnik, insbesondere zweier Steckdosen, **dadurch gekennzeichnet, dass** der Adapter (A) mindestens einen ersten und einen zweiten Kopplungsabschnitt (KE1, KE2) und mindestens einen ersten und einen zweiten bezüglich der Kopplungsabschnitte (KE1, KE2) in Einbautiefenrichtung versetzten Kopplungsflansch (KF1, KF2) aufweist, wobei der erste Kopplungsabschnitt (KE1) und der zweite Kopplungsabschnitt zur Kopplung (KE2) mit jeweils einem Installationsgerät (I1, I2) ausgebildet ist.

2. Adapter (A) nach Anspruch 1, **dadurch gekennzeichnet, dass** der erste und zweite Kopplungsabschnitt (KE1, KE2) in den Tragring (T) der Installationsgeräte (I1, I2) eingreifen.

3. Adapter (A) nach Anspruch 1 oder 2, **dadurch gekennzeichnet, dass** der erste und zweite Kopplungsflansch (KF1, KF2) in einen Bereich des Sockeleinsatzes (S) der Installationsgeräte (I1, I2) eingreifen.

4. Adapter (A) nach einem der Ansprüche 1 bis 3, **dadurch gekennzeichnet, dass** der Adapter (A) Elemente (LF) zur Leitungsführung und/oder Polverbindung aufweist.

5. Adapter (A) nach einem der Ansprüche 1 bis 4, **dadurch gekennzeichnet, dass** der Adapter (A) einen Lösehebelmechanismus aufweist, um eine Kopplung zweier Installationsgeräte (I1, I2) rückgängig zu machen.

6. Adapter (A) nach Anspruch 5, **dadurch gekennzeichnet, dass** der Lösehebelmechanismus so ausgebildet ist, dass der erste und zweite Kopplungsabschnitt (KE1, KE2) bei einer Betätigung des Lösehebelmechanismus flexibel ausgebildet ist und sich bewegt, um die Kopplung der Installationsgeräte (I1, I2) rückgängig zu machen.

7. Adapter (A) nach einem der Ansprüche 1 bis 6, **dadurch gekennzeichnet, dass** der Adapter (A) ein erstes und ein zweites Einsatzelement für Spreizkrallenaufnahmen der zwei Installationsgeräte (I1, I2) aufweist, wobei die Einsatzelemente in mechanischer Wirkverbindung mit den Spreizkrallenaufnahmen stehen.

8. Anordnung umfassend zwei Installationsgeräte (I1, I2) und einen Adapter (A) nach einem der Ansprüche 1 bis 7, **dadurch gekennzeichnet, dass** die zwei Installationsgeräte (I1, I2) durch den Adapter (A) gekoppelt sind.

9. Anordnung nach Anspruch 8 in seinem Rückzug auf Anspruch 4, **dadurch gekennzeichnet, dass** die Installationsgeräte (I1, I2) mit elektrischen Leitungen (K) verbunden sind, wobei der Adapter (A) Elemente (LF) zur Leitungsführung und/oder Polverbindung aufweist.
